# EUROPÄISCHE PATENTANMELDUNG

(11) **EP 1 502 643 A1**
(43) Veröffentlichungstag der Anmeldung: **02.02.2005**
(21) Anmeldenummer: 04017982.2
(22) Anmeldetag: 29.07.2004
(51) Int. Cl.: B01F 3/12, A47J 31/40, B01F 13/08

(54) **Verfahren zum Herstellen eines Lebensmittels**

(30) Priorität: 30.07.2003 DE 10335179
(71) Anmelder: Förster, Martin, 78234 Engen (DE)
(72) Erfinder: Förster, Martin, 78234 Engen (DE)
(74) Vertreter: Weiss, Peter, Dr.

(57) **Zusammenfassung**

Bei einem Verfahren zum Herstellen eines Lebensmittels aus einer Flüssigkeit und einem zweiten, insbesondere festen Stoff, welche miteinander in einem Behältnis (1) mit einem Rührelement (9) vermischt werden, soll das Behältnis (1) einer Mischstation (M) zugeführt werden, in welcher die Flüssigkeit und der zweite Stoff automatisch dosiert in das Behältnis (1) eingefüllt und das Rührelement (9) automatisch in das Behältnis (1) eingetaucht wird.

## Beschreibung

Die Erfindung betrifft ein Verfahren zum Herstellen eines Lebensmittels aus einer Flüssigkeit und einem zweiten, insbesondere festen Stoff, welche miteinander in einem Behältnis mit einem Rührelement vermischt werden, sowie einer Vorrichtung hierfür.

### STAND DER TECHNIK

In der Gastronomie und im Haushalt gibt es Mixer, insbesondere handgetriebene Mixer, mit denen ein Lebensmittel hergestellt werden kann. Wird beispielsweise die Herstellung eines Breis gewünscht, so erfolgt ein Einmischen eines Breipulvers in eine entsprechende Flüssigkeit, beispielsweise in Wasser oder Milch. Nach dem Vermischen der Flüssigkeit und des Pulvers wird der Mixer dem entsprechenden Behältnisses entnommen und gereinigt. Das Lebensmittel kann aus dem Behältnis verkonsumiert werden.

### AUFGABE

Der vorliegenden Erfindung liegt die Aufgabe zugrunde, ein Verfahren und eine Vorrichtung der o.g. Art anzubieten, mit denen ein Lebensmittel portionsweise automatisiert, ähnlich einer Kaffeemaschine, insbesondere vom Verbraucher selbst, hergestellt werden kann.

### LÖSUNG DER AUFGABE

Zur Lösung dieser Aufgabe führt, dass das Behältnis einer Mischstation zugeführt wird, in welcher die Flüssigkeit und der zweite Stoff automatisch dosiert in das Behältnis eingefüllt und das Rührelement automatisch in das Behältnis eingetaucht wird.

Damit wird das Herstellen eines Lebensmittels automatisiert. Der Verbraucher braucht lediglich einen Knopf zu drücken, damit das Behältnis der Mischstation zugeführt wird, der Dosierungsvorgang und der Mischvorgang in Gang gesetzt werden. Vom Erfindungsgedanken soll allerdings auch umfasst werden, dass der Verbraucher selbst das Behältnis in die Mischstation einstellt oder separat durch entsprechenden Knopfdruck den Einfüllvorgang für Flüssigkeit und/oder festen Stoff und/oder das Mischen beginnt.

In einem besonderen Ausführungsbeispiel der Erfindung ist daran gedacht, dass das Rührelement nach dem Mischen in dem Behältnis verbleibt. Hier bietet es sich an, als Rührelement einen Löffel zu verwenden, mit dem der Verbraucher anschliessend an den Mischvorgang das fertiggestellte Lebensmittel aus dem Behältnis entnehmen kann.

In einem Ausführungsbeispiel der Erfindung ist daran gedacht, dass der Löffel aus einem Löffelspender automatisch einem Rührmechanismus zugeführt wird, der auch eine Einrichtung beinhaltet, welche den Löffel nach dem Mischen - bevorzugt automatisch - von beispielsweise einer Rührwelle löst, so dass der Löffel in der hergestellten Mischung verbleiben kann. Es ist jedoch auch daran gedacht, dass der Benutzer selbst einen Löffel einem Behältnis entnimmt und diesen auf die Rührwelle aufsteckt. Vor allem in diesem Fall dürfte es sich als ratsam erweisen, dass die Rührwelle selbst anhebbar ist, so dass ein Aufstecken des Löffels leichter erfolgen kann. Danach kann die Rührwelle absenkbar sein, so dass der Löffel auf den Boden des Behältnisses auftrifft und dadurch sichergestellt wird, dass der Löffel auch richtig auf die Rührwelle aufgesteckt ist. Oft genügt aber ein einfaches Einstecken in einen Halter, der mit entsprechenden Halteelementen versehen ist. Die Halterung erfolgt bevorzugt automatisch. Danach wird die Rührwelle leicht angehoben und in Drehung versetzt.

Gleichgültig, ob ein Löffel oder ein anderes Rührelement verwendet wird, ist daran gedacht, mit dem Anheben und Absenken der Rührwelle auch eine Schutzvorrichtung zu koppeln. Beispielsweise könnte dies ein durchsichtiger Kunststoffzylinder sein, welcher das Behältnis in der Mischstation abdeckt.

Allerdings soll die Erfindung nicht auf den Löffel als Rührelement beschränkt bleiben. Als Rührelement könnten auch bekannt Rührer in Frage kommen, die beispielsweise nach dem Mischen des Lebensmittels aus der Mischstation in eine Reinigungsstation einfahren, sich dort reinigen und wieder automatisch zurück zur Mischstation gebracht werden.

Denkbar ist als Rührelement auch z.B. ein Magnetrührer, wie er in der DE 34 39 654 C2 gezeigt ist. Das entsprechende, sich in dem Behältnis befindende magnetische Element kann nach dem Anmischen des Lebensmittels aus dem Behältnis genommen und gereinigt werden. Auch dies kann automatisiert werden.

Von untergeordneter Bedeutung ist, ob sich das Rührelement selbst dreht oder ob sich der Behälter um das Rührelement dreht. Denkbar ist auch eine exzentrische Anordnung des Behälters gegenüber dem Rührelement, so dass das Rührelement grössere Bereiche in dem Behälter bearbeiten kann. Insbesondere in letzterem Fall dreht sich sowohl der Behälter um das Rührelement als auch das Rührelement in dem Behälter.

Ferner sollte das Rührelement so weit wie möglich entfernt von der Zugabe des festen Stoffes angeordnet werden, damit sich nicht fester Stoff an dem Rührelement ansetzt.

Insbesondere, wenn der Behälter gedreht wird, aber auch wenn das Rührelement in dem Behälter gedreht wird, besteht die Gefahr, dass der Behälter sich selbständig relativ zu einer Aufstellfläche des Behälters dreht. Um diese zu vermeiden, sollte der Behälter gegenüber der Aufstellfläche festgelegt werden. In einem einfachen Ausführungsbeispiel geschieht dies dadurch, dass dem Behälter ein Henkel angeformt ist, der beispielsweise in eine Mulde eingreift, die in einen Ringwall um den Behälter herum eingeformt ist. Der Ringwall ragt von der Aufstellfläche auf.

Ferner sollte auch die Flüssigkeit so in den Behälter eingebracht werden, dass sich möglicherweise an der Behälterinnenwand festsetzender fester Stoff abgespült wird. Deshalb ist daran gedacht, die Flüssigkeit tangential zu der Behälterinnenwand einzubringen. Denkbar ist auch, die Flüssigkeit zu teilen, so dass ein Teil die Behälterinnenwand abreinigt und ein anderer Teil auf das Rührelement gerichtet ist.

Sollten verschiedene Stoffe in das Behältnis eingebracht werden, so stehen selbstverständlich mehrere Zufuhreinrichtungen mit entsprechender Steuerung zur Verfügung.

Sollte beispielsweise warmer Pudding gewünscht werden, so ist die Flüssigkeit vorgewärmt und/oder die Aufstellfläche als Heizplatte ausgebildet.

In einem anderen Ausführungsbeispiel der Erfindung könnte als Beispiel für das Lebensmittel ein Pudding vorher fertiggestellt und warmgehalten werden. Dies geschieht in einem entsprechenden Vorratsbehälter der Vorrichtung. Diesem Vorratsbehälter ist an einer Entnahmestelle eine Einrichtung zum Portionieren zugeordnet, so dass beispielsweise durch Knopfdruck auf Wunsch des Benutzers eine bestimmte Portion in ein Behältnis abgefüllt wird.

Es könnte auch daran gedacht sein, den Pudding kalt in einem Vorratsbehälter aufzubewahren und nach der Portionierung über einen Wärmetauscher in das Behältnis abzufüllen.

Die vorliegende Erfindung wird zwar im Zusammenhang mit der Herstellung von Pudding erwähnt, diese ist aber bei einer Vielzahl von Lebensmitteln anwendbar. Nur beispielsweise wird auf Rote Grütze verwiesen, die mit dem Verfahren und der Vorrichtung nach der vorliegenden Erfindung hergestellt werden kann, wobei zusätzlich auf diese Rote Grütze noch Vanillepudding aufgebracht werden könnte. Auch dies ist nur ein Beispiel.

Um die Benutzung einer entsprechenden Vorrichtung zu vereinfachen, ist daran gedacht, dass sich beispielsweise auf der Bedientafel ein kleiner Bildschirm befindet, auf welchem der Herstellvorgang, beispielsweise in Art eines Comicfilms dargestellt wird. Hierdurch werden Fehler vermieden und dem Benutzer sehr schnell die Arbeit der Vorrichtung klargemacht.

In der Praxis hat sich herausgestellt, dass sich oberhalb der Mischstation Kondenswasser absetzt. Aus diesem Grunde ist vorgesehen, dass über dem Behälter ein Dach angeordnet wird. Um Kondenswasser an dem Dach, den Seitenwänden und/oder der Hinterwand zu vermeiden, ist vorgesehen, dass diese beheizbar ausgestaltet sind. Femer ist in einem bevorzugten Ausführungsbeispiel der Mischstation ein Gebläse zugeordnet, mit welchem ebenfalls das Kondenswasser vermieden oder beseitigt wird.

### FIGURENBESCHREIBUNG

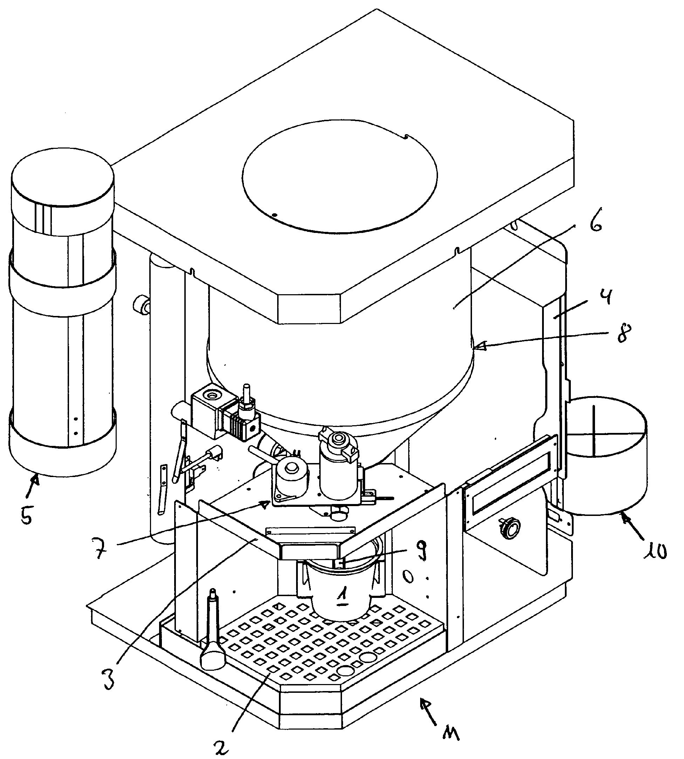

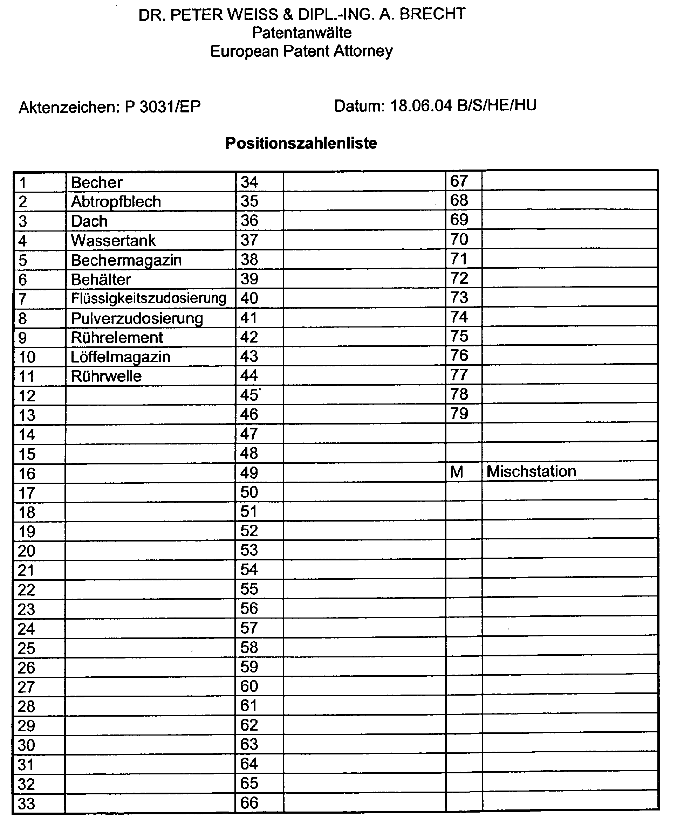

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in ihrer einzigen Figur eine schematische Darstellung einer erfindungsgemässen Vorrichtung zum Herstellen eines Lebensmittels.

Die Herstellung des Lebensmittels soll in einem Becher 1 erfolgen, der sich in einer Mischstation M befindet. Dabei sitzt der Becher 1 auf einem Abtropfblech auf. Im übrigen wird der Becher aus einem Bechermagazin 5 genommen.

Oberhalb des Abtropfblechs 2 befindet sich ein Dach 3, welches beheizbar ist. Dies hat den Vorteil, dass Dampf, der möglicherweise aus dem Behälter 1 aufsteigt, nicht am Dach 3 kondensiert, so dass sich kein zurücktropfendes Kondenswasser bildet. Eventuell können zu diesem Zweck auch Hinterwand und Seitenwand beheizt werden.

In der Mischstation M ist dem Becher 1 eine Flüssigkeitszudosierung 7 und eine Pulverzudosierung 8 zugeordnet. Das Pulver befindet sich dabei in einem Behälter 6, in dem auch eine Füllstandsüberwachung vorgesehen ist. Die Flüssigkeit kann direkt aus beispielsweise einer Wasserleitung oder aber aus einem eigenen Wassertank 4 entnommen werden, der hinter dem Behälter 6 angeordnet und bevorzugt beheizbar ist.

Zum Anmischen des Lebensmittels in dem Behälter 1 wird die Flüssigkeit über die Flüssigkeitszudosierung 7 und beispielsweise Breipulver über die Pulverzudosierung 8 in den Behälter 1 eingegeben. Das Vermischen von Flüssigkeit und Pulver übernimmt ein Rührelement 9. Dabei kann es sich auch um einen Löffel handeln, der aus einem Löffelmagazin 10 stammt. Ein einzelner Löffel 9 wird aus dem Löffelmagazin 10 einer Rührwelle zugeführt und mit dieser - bevorzugt automatisch - so verbunden, dass der Löffel nach dem Anmischen des Lebensmittels in dem Behälter 1 verbleiben kann. D.h., der Löffel ist - bevorzugt automatisch - lösbar an der Rührwelle angeordnet.

Ferner ist daran gedacht, dass das Rührelement einer programmgesteuerten Drehzahlveränderung unterworfen wird. Beispielsweise beginnt das Rühren mit einer relativ langsamen Umdrehungszahl, so dass ein Spritzen vermieden wird. Nach einer bestimmten Zeit oder bestimmten Viskosität wird die Drehzahl erhöht.

Das Programm übernimmt auch die Regelung der Heizung, die Regelung der Umdrehungszahl und die Regelung des Rührens, wobei dies vom herzustellenden Lebensmittel und dessen Dosierung abhängig ist. Entsprechend den Vorgaben des Lebensmittelsherstellers erfolgt eine Temperierung des Produkts beispielsweise durch entsprechendes Vorerwärmen der Flüssigkeit auf eine gewünschte Temperatur.

### Die Funktionsweise der vorliegenden Erfindung ist folgende:

Zum Anmischen eines Lebensmittels, beispielsweise eines Breis, wird ein Behälter 1 in die Mischstation M gesetzt. In den Behälter 1 taucht das Rührelement 9 ein. Die Rührwelle 11 wird in Drehbewegung versetzt. Vorher, gleichzeitig oder danach wird Flüssigkeit und Pulver zudosiert. Durch das Rührelement 9 werden Flüssigkeit und Pulver zum Lebensmittel, insbesondere zu einem Brei vermengt, der sofort verkonsumierbar ist.

Nach Beendigung des Anmischvorganges wird der Löffel 9 von der Rührwelle 11 abgestossen und verbleibt in dem Behälter. Der Löffel 9 kann vom Verbraucher als Entnahmeeinrichtung für den Brei benutzt werden.

## Patentansprüche

1. Verfahren zum Herstellen eines Lebensmittels aus einer Flüssigkeit und einem zweiten, insbesondere festen Stoff, welche miteinander in einem Behältnis (1) mit einem Rührelement (9) vermischt werden,
**dadurch gekennzeichnet,**
**dass** das Behältnis (1) einer Mischstation (M) zugeführt wird, in welcher die Flüssigkeit und der zweite Stoff automatisch dosiert in das Behältnis (1) eingefüllt und das Rührelement (9) automatisch in das Behältnis (1) eingetaucht wird.

2. Verfahren zum Herstellen eines Lebensmittels aus einer Flüssigkeit und einem zweiten, insbesondere festen Stoff, welche miteinander in einem Behältnis (1) mit einem Rührelement (9) vermischt werden, **dadurch gekennzeichnet, dass** die Mischung in einem Vorratsbehältnis selbst erfolgt oder eine Mischung in dieses Vorratsbehältnis eingegeben und automatisch auf Anforderung portionsweise aus dem Vorratsbehältnis entnommen wird.

3. Verfahren nach Anspruch 1 oder 2, **dadurch gekennzeichnet, dass** das Rührelement (9) nach dem Mischen in dem Behältnis (1) belassen wird.

4. Verfahren nach Anspruch 1 oder 2, **dadurch gekennzeichnet, dass** das Rührelement (9) nach dem Mischen aus dem Behältnis (1) genommen und einer Reinigung unterworfen wird.

5. Verfahren nach wenigstens einem der Ansprüche 1 bis 4, **dadurch gekennzeichnet, dass** die Flüssigkeit tangential und/oder geteilt in das Behältnis (1) eingebracht wird.

6. Verfahren nach wenigstens einem der Ansprüche 1 bis 5, **dadurch gekennzeichnet, dass** die Drehzahl des Rührelementes (9) veränderbar ist.

7. Verfahren nach wenigstens einem der Ansprüche 1 bis 6, **dadurch gekennzeichnet**, das ermittelt und/oder signalisiert wird, ob Behältnis (1) und/oder Rührelement (9) in der richtigen Position ist.

8. Verfahren nach wenigstens einem der Ansprüche 1 bis 7, **dadurch gekennzeichnet, dass** die Flüssigkeit auf eine für den zweiten Stoff vorgegebene Temperatur gebracht wird.

9. Vorrichtung zur Durchführung des Verfahrens nach einem der Ansprüche 1 bis 5, **dadurch gekennzeichnet, dass** das Rührelement (9) in dem Behältnis (1) und/oder das Behältnis (1), ggf. exzentrisch, um das Rührelement (9) dreht.

10. Vorrichtung nach Anspruch 9, **dadurch gekennzeichnet, dass** das Rührelement fern von einer Zudosierung (8) des festen Stoffes angeordnet ist.

11. Vorrichtung nach Anspruch 9 oder 10, **dadurch gekennzeichnet, dass** das Rührelement (9) ein verlierbarer Löffel ist.

12. Vorrichtung nach Anspruch 9, **dadurch gekennzeichnet, dass** das Rührelement ein Magnetrührer ist.

13. Vorrichtung nach einem der Ansprüche 9 bis 12, **dadurch gekennzeichnet, dass** dem Rührelement (9) und dem Behältnis (1) eine Schutzvorrichtung, beispielsweise als Lichtschranke ausgebildet, zugeordnet ist.

14. Vorrichtung nach wenigstens einem der Ansprüche 9 bis 13, **dadurch gekennzeichnet, dass** das Behältnis (1) auf einer Aufstellfläche (2) festlegbar ist.

15. Vorrichtung nach wenigstens einem der Ansprüche 9 bis 14, **dadurch gekennzeichnet, dass** über den Behälter (1) ein Dach (3) vorgesehen ist.

16. Vorrichtung nach Anspruch 15, **dadurch gekennzeichnet, dass** das Dach (3), Seitenwände und/oder Hinterwand beheizbar ist.

17. Vorrichtung nach wenigstens einem der Ansprüche 1 bis 16, **dadurch gekennzeichnet, dass** der Mischstation ein Gebläse zugeordnet ist.

18. Vorrichtung nach Anspruch 17, **dadurch gekennzeichnet, dass** das Gebläse auf das Dach (3), Seitenwände und/oder Hinterwand gerichtet ist.
